(19) Europäisches Patentamt / European Patent Office / Office européen des brevets

(11) **EP 4 454 855 B1**

(12) **EUROPEAN PATENT SPECIFICATION**

(45) Date of publication and mention
of the grant of the patent:
**03.09.2025  Bulletin 2025/36**

(21) Application number: **24172347.7**

(22) Date of filing: **25.04.2024**

(51) International Patent Classification (IPC):
**B29C 45/76** $^{(2006.01)}$    **G06F 30/27** $^{(2020.01)}$
**G06F 113/22** $^{(2020.01)}$

(52) Cooperative Patent Classification (CPC):
**B29C 45/766; G06F 30/27;** B29C 2945/76949;
B29C 2945/76979; G06F 2113/22

(54) **OPERATING CONDITION CORRECTION METHOD, OPERATING CONDITION CORRECTION DEVICE, MOLDING MACHINE AND COMPUTER PROGRAM**

VERFAHREN ZUR KORREKTUR VON BETRIEBSBEDINGUNGEN, VORRICHTUNG ZUR KORREKTUR VON BETRIEBSBEDINGUNGEN, FORMMASCHINE UND COMPUTERPROGRAMM

PROCÉDÉ DE CORRECTION DE CONDITION DE FONCTIONNEMENT, DISPOSITIF DE CORRECTION DE CONDITION DE FONCTIONNEMENT, MACHINE DE MOULAGE ET PROGRAMME INFORMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.04.2023  JP 2023071532**

(43) Date of publication of application:
**30.10.2024  Bulletin 2024/44**

(73) Proprietor: **The Japan Steel Works, Ltd.**
**Tokyo 141-0032 (JP)**

(72) Inventors:
  • **YOKOTA, Takumi**
    **Shinagawa-ku, Tokyo, 1410032 (JP)**
  • **SAEKI, Akihiko**
    **Shinagawa-ku, Tokyo, 1410032 (JP)**
  • **AKAGI, Takashi**
    **Shinagawa-ku, Tokyo, 1410032 (JP)**

(74) Representative: **Simmons & Simmons LLP (Munich)**
**Lehel Carré**
**Gewürzmühlstraße 11**
**80538 Munich (DE)**

(56) References cited:
EP-A2- 0 756 219     DE-A1- 19 518 804
US-A- 5 035 598      US-A1- 2022 339 837

**Description**

[Technical Field]

The present invention relates to an operating condition correction method, an operating condition correction device, a molding machine and a computer program.

[Background Art]

There is provided a molding machine system that corrects molding conditions of an injection molding machine using a machine learner so that a molded product increases proximity to a conforming item, for example see documents US 2022/339837 A1 and JP 2022-045698 A.

[Summary of Invention]

[Problems to be Solved by Invention]

The correction accuracy for the molding conditions proposed by the learner is not 100%, which causes such a problem that the learner may perform a reverse proposal leading to inappropriate correction of molding conditions. The reverse proposal is a proposal that worsens the defect of a molded product. Such a problem occurs not only in an injection molding machine, but in other industrial machines that correct the operating conditions using learners.

An object of the present disclosure is to provide an operating condition correction method, an operating condition correction device, a molding machine and a computer program that can exclude a reverse proposal by a learner and can correct operating conditions more appropriately.

[Means for Solving Problems]

An operating condition correction method according to one aspect of the present disclosure is an operating condition correction method of an industrial machine, and comprises: acquiring measurement data obtained by measuring a state of the industrial machine and inspection data obtained by inspecting a state of a product manufactured by the industrial machine; calculating a correction quantity of the operating condition based on the acquired measurement data and inspection data using a plurality of learners trained with an association between the measurement data and the inspection data and a correction quantity of the operating condition; determining appropriateness of a correction direction of each of a plurality of the correction quantities calculated using the plurality of learners; and correcting the operating condition based on one or more of the plurality of the correction quantities determined as having the correction direction being appropriate.

An operating condition correction device according to one aspect of the present disclosure is an operation condition correction device for correcting an operating condition of an industrial machine, and comprises: an acquisition unit that acquires measurement data obtained by measuring a state of the industrial machine and inspection data obtained by inspecting a state of a product manufactured by the industrial machine; a plurality of learners, trained with an association between the measurement data as well as the inspection data and a correction quantity of the operating condition, that calculates a correction quantity of the operating condition based on the acquired measurement data and inspection data; a determination unit that determines appropriateness of a correction direction of each of a plurality of the correction quantities calculated using the plurality of learners; and a correction unit that corrects the operating condition based on one or more of the plurality of the correction quantities determined as having the correction direction being appropriate.

A molding machine according to one aspect of the present disclosure is provided with the above-mentioned operating condition correction device.

A computer program according to one aspect of the present disclosure is a computer program causing a computer to execute processing of correcting an operating condition of an industrial machine, and comprises: acquiring measurement data obtained by measuring a state of the industrial machine and inspection data obtained by inspecting a state of a product manufactured by the industrial machine; calculating a correction quantity of the operating condition based on the acquired measurement data and inspection data using a plurality of learners trained with an association between the measurement data as well as the inspection data and a correction quantity of the operating condition; determining appropriateness of a correction direction of each of a plurality of the correction quantities calculated using the plurality of learners; and correcting the operating condition based on one or more of the plurality of the correction quantities determined as having the correction direction being appropriate.

[Effect of Invention]

The present disclosure makes it possible to correct the operating conditions more appropriately while excluding the reverse proposal by a learner.

[Brief Description of Drawings]

FIG. 1 is a schematic view illustrating an example of the configuration of an injection molding machine according to a first embodiment.
FIG. 2 is a block diagram illustrating an example of the configuration of the injection molding machine according to the first embodiment.
FIG. 3 is a conceptual diagram illustrating an operating condition correction processing method according to the first embodiment.
FIG. 4 is a flowchart illustrating an operating condition correction processing procedure according to the first embodiment.
FIG. 5 is a block diagram illustrating an example of the configuration of an injection molding machine according to a second embodiment.
FIG. 6 is a conceptual diagram showing a direction definition table according to the second embodiment.
FIG. 7 is a conceptual diagram illustrating an operating condition correction processing method according to the second embodiment.
FIG. 8 is a flowchart illustrating an operating condition correction processing procedure according to the second embodiment.
FIG. 9 is a block diagram illustrating an example of the configuration of an injection molding machine according to a third embodiment.
FIG. 10 is a conceptual diagram illustrating an appropriateness determination model according to the third embodiment.

[Mode for Carrying Out Invention]

Specific examples of an operating condition correction method, an operating condition correction device, a molding machine and a computer program according to embodiments of the present invention will be described below with reference to the drawings. Furthermore, at least parts of the following embodiments described below may arbitrarily be combined. It should be noted that the invention is not limited to these examples, and is indicated by the scope of claims, and is intended to include all modifications within the meaning and scope equivalent to the scope of claims.

First Embodiment

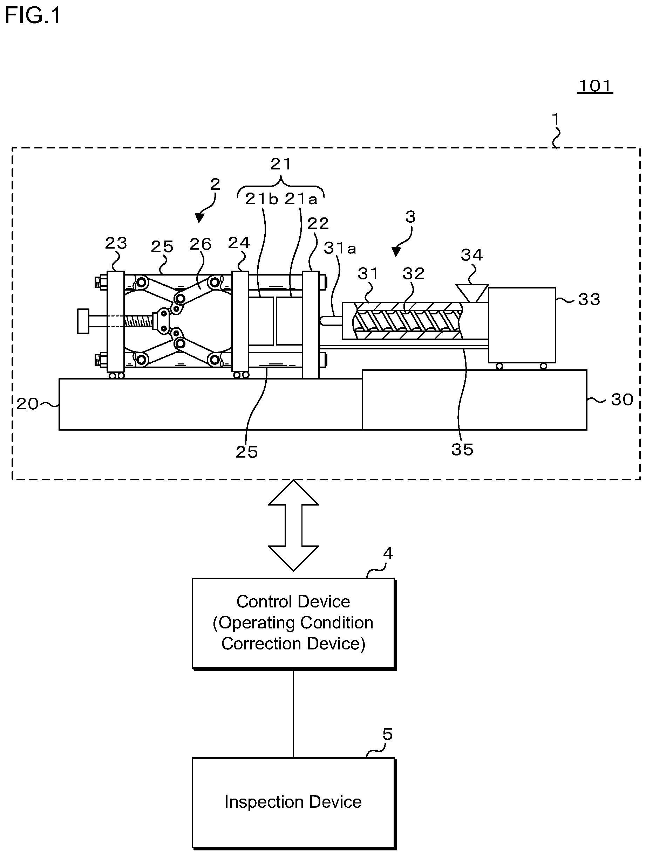

FIG. 1 is a schematic view illustrating an example of the configuration of an injection molding machine 101 according to the present embodiment. The injection molding machine 101 according to the present embodiment is equipped with a mold clamping device 2 that clamps a metal mold 21, an injection device 3 that plasticizes and injects molding material, a control device 4 and an inspection device 5. The mold clamping device 2 and the injection device 3 constitute a molding machine body 1. The control device 4 functions as an operating condition correction device according to the present embodiment.
The mold clamping device 2 is equipped with a fixed platen 22 fixed on a bed 20, a mold clamping housing 23 that slides over the bed 20 and a movable platen 24 that similarly slides over the bed 20. The fixed plate and the mold clamping housing 23 are connected with multiple, e.g., four tie bars 25, 25, .... The movable platen 24 is structured so as to be slidable between the fixed platen 22 and the mold clamping housing 23. Between the mold clamping housing 23 and the movable platen 24, a mold clamping mechanism 26 is provided.
The mold clamping mechanism 26 is composed of a toggle mechanism, for example. Note that the mold clamping mechanism 26 may be composed of a direct clamping mechanism, i. e., a mold clamping cylinder. The fixed platen 22 and the movable platen 24 are respectively provided with a fixed mold 21a and a movable mold 21b, and the metal mold 21 is configured to open or close when the mold clamping mechanism 26 is driven.
The injection device 3 is located on a base 30. The injection device 3 is equipped with a heating cylinder 31 having a nozzle 31a at the tip thereof and a screw 32, which is rotatable in circumferential and axial directions, provided inside the heating cylinder 31. The screw 32 is driven in the rotational and axial directions by a drive mechanism 33. The drive mechanism 33 is composed of a rotary motor that drives the screw 32 in the rotational direction and a motor that drives the screw 32 in the axial direction and the like. Since the drive mechanism 33 illustrated in FIG. 1 is covered with a cover, the internal configuration thereof is not illustrated.

A hopper 34 into which molding material is inserted is provided near the rear end of the heating cylinder 31. The injection molding machine 101 is equipped with a nozzle touch device 35 that moves the injection device 3 in the front-back direction (right-left direction in FIG. 1). When the nozzle touch device 35 is driven, the injection device 3 advances to allow the nozzle 31a of the heating cylinder 31 to be in touch with a close-contact portion of the fixed platen 22.

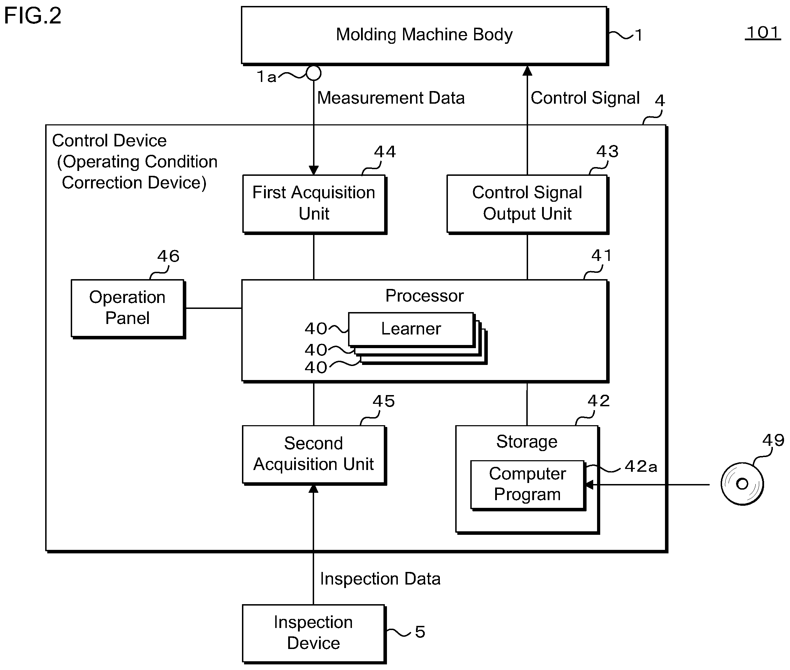

FIG. 2 is a block diagram illustrating an example of the configuration of the injection molding machine 101 according to the present embodiment. The control device 4 is a computer that controls the operation of the mold clamping device 2 and the injection device 3 and is equipped with a processor 41, a storage 42, a control signal output unit 43, a first acquisition unit 44, a second acquisition unit 45 and an operation panel 46 as hardware components. The processor 41 has multiple learners 40 as functional parts. Note that parts of the multiple learners 40 may be realized in hardware.

The control device 4 is a device for correcting molding conditions (operating conditions) of the injection molding machine 101 (see FIG. 1). Note that the control device 4 may be a server device connected to a network. Moreover, the control device 4 may be configured with multiple computers to perform distributed processing, may be realized by multiple virtual machines configured in a single server, or may be realized using a cloud server.

The processor 41 includes an arithmetic processing circuit such as a CPU (Central Processing Unit), a multi-core CPU, a GPU (Graphics Processing Unit), a General-purpose computing on graphics processing units (GPGPU), a Tensor Processing Unit (TPU), an Application Specific Integrated Circuit (ASIC), an Field-Programmable Gate Array (FPGA) and an Neural Processing Unit (NPU), an internal storage device such as a ROM (Read Only Memory) and a RAM (Random Access Memory), an I/O terminal, a timer unit and the like. The processor 41 implements a molding condition correction method according to the present embodiment by executing a computer program (program product) 42a stored in the storage 42 described later. Note that each functional part of the control device 4 may be realized in software, or some or all of the functional parts thereof may be realized in hardware.

The storage 42 is a nonvolatile memory such as a hard disk, an Electrically Erasable Programmable ROM (EEPROM), a flash memory or the like. The storage 42 stores the computer program 42a for causing the computer to machine-train a correction method of the molding conditions depending on the states of the injection molding machine 101 and a molded product, and to execute operating condition correction processing. The storage 42 stores various coefficients that feature the respective multiple learners 40.

The computer program 42a according to the present embodiment may be recorded on a recording medium 49 so as to be readable by the computer. The storage 42 stores the computer program 42a read from the recording medium 49 by a reader. The recording medium 49 is a semiconductor memory such as a flash memory. Furthermore, the recording medium 49 may be an optical disc such as a CD (Compact Disc)-ROM, a DVD (Digital Versatile Disc)-ROM or a BD (Blu-ray (registered trademark) Disc). Moreover, the recording medium 49 may be a magnetic disk such as a flexible disk or a hard disk, or a magneto-optical disk.

In addition, the computer program 42a according to the present embodiment may be downloaded from an external server connected to a communication network and stored in the storage 42.

The multiple learners 40 correspond to multiple models trained on correction quantities of the molding conditions to be set to the injection molding machine 101 using different algorithms. Each of the multiple learners 40 corresponds to a model that outputs a correction quantity for the molding conditions when measurement data and inspection data are input.

The multiple learners 40 include, for example, a reinforcement learning model, a learning model trained with supervised learning and a regression model trained by a gradient method. Models trained with different training data using the same algorithm may be employed as multiple different learners 40. Note that the types of the learners 40 are not limited to the examples described above. The multiple learners 40, for example, may be constructed using algorithms such as an arbitrary neural network model, decision tree, random forest, Support Vector Machine (SVM) and the like.

The correction quantity output from each of the learners 40 is generally a vector quantity consisting of change values of multiple parameters. The correction quantity required to correct molding conditions related to molding defects such as flash and a short shot of a molded product is expressed as, for example, a change value in holding pressure, a change value in holding pressure switchover position and a change value in injection speed. The direction of the vector of the correction quantity is referred to as a correction direction below.

The correction quantities output from the multiple learners 40 generally include correction quantities related to the reverse proposal. The correction quantities related to the reverse proposal include the change values opposite in sign (positive or negative) to accurate correction quantities. As described below, the processor 41 according to the present embodiment executes processing of excluding the correction quantities related to the reverse proposal, selecting the correction quantities in the proper correction direction and correcting the molding condition to thereby appropriately correct the operating condition.

The control signal output unit 43 outputs, to the molding machine body 1, a control signal for controlling the operation of the injection molding machine 101 according to the control by the processor 41 based on the molding conditions.

The operation panel 46 is an interface for allowing setting of molding conditions or the like of the injection molding machine 101 and for operating the action of the injection molding machine 101. The operation panel 46 is equipped with a display panel and an operation device. The display panel, which is a display device such as a liquid crystal display panel, an organic EL display panel or the like, displays an acceptance screen to accept the settings of molding conditions for the injection molding machine 101 according to the control by the processor 41 or displays the state of the injection molding machine 101 and the implementation status of the molding condition correction method according to the present embodiment. The operation device, which is an input device for inputting and correcting the molding conditions of the injection molding machine 101, has an operation button, a touch panel and the like. The operating device sends data indicating the accepted molding conditions to the processor 41.

Configuration parameters related to various molding conditions are set to the injection molding machine 101. The molding conditions include an injection start position, a resin temperature in the metal mold, a nozzle temperature, a cylinder temperature (heater temperature), a hopper temperature, a mold clamping force, an injection speed, an injection acceleration, an injection peak pressure (injection pressure) and an injection stroke. The molding conditions further include a cylinder tip resin pressure, a reverse protection ring seated state, a holding pressure, an injection/pressure holding switchover speed, an injection/pressure holding switchover position, a holding pressure completion position, a cushion position, a measured back pressure and measured torque. Moreover, the molding conditions include a measurement completion position, a screw retreat speed, a cycle time, a mold closing time, an injection time, a holding time, a measurement time and a mold opening time. In addition, the molding conditions include a cooling time, a screw speed, a mold opening and closing speed, an ejection speed and the number of ejections.

The injection molding machine 101 configured with these configuration parameters operates according to these configuration parameters. Of the molding conditions described above, the configuration parameters such as a holding pressure, an injection/pressure holding switchover position and an injection speed are related to molding defects such as flash, a short shot or the like. In the present embodiment, an example is described where the holding pressure [MPa], the injection/pressure holding switchover position [mm] and the injection speed [mm/sec] are corrected using the learners 40.

The first acquisition unit 44 is an input circuit that acquires measurement data obtained by measuring the state of the injection molding machine 101.

The mold clamping device 2 and the injection device 3 (see FIG. 1) are equipped with one or more sensors 1a for detecting information indicating the state of the injection molding machine 101 and physical quantities necessary for controlling the operation of the molding machine body 1. The sensor 1a is connected to the first acquisition unit 44. The physical quantities include, for example, voltage, current, temperature, humidity, forces such as torque, pressure, speed, acceleration, rotation angle, position of movable parts, rate, velocity of fluid and the like. The sensor 1a includes, for example, a current sensor, a voltage sensor, a temperature sensor, a humidity sensor, a torque sensor, a pressure sensor, a speed sensor, an acceleration sensor, a rotation angle sensors, a position sensor, a flow sensor, a flow meter and the like. The sensor 1a outputs a measurement signal indicating a physical quantity to the control device 4. The measurement signal output from the sensor 1a is input to the first acquisition unit 44, which acquires the measurement signal as measurement data.

The measurement data indicates the operational status of the injection molding machine 101 and includes, for example, a cycle time [sec], an injection time [sec], a holding time [sec], an injection/pressure holding switchover position [mm], an injection/pressure holding switchover speed [mm/sec], an injection/pressure holding switchover pressure [MPa], a cushion position [mm], a holding complete position [mm], a measurement time [sec], a back pressure [MPa], a measurement completion position [mm] and the like. Note that, for each position, a reverse direction of the screw 32 (right direction in FIG. 1) is regarded as positive.

The second acquisition unit 45 is an input circuit for acquiring inspection data obtained by inspecting the state of a molded product molded by the injection molding machine 101. The second acquisition unit 45 is connected to the inspection device 5. The inspection device 5, which includes a camera, a distance measuring sensor and a weighing sensor for detecting the state of a molded product, measures the physical quantities related to the state of the molded product and obtains inspection data indicating the state of the molded product based on the physical quantity data obtained by measurement. The inspection data is data indicating the area of flash and the area of a short shot of a molded product, for example. In addition, the inspection data is data indicating flash due to resin viscosity or a short shot due to resin viscosity.

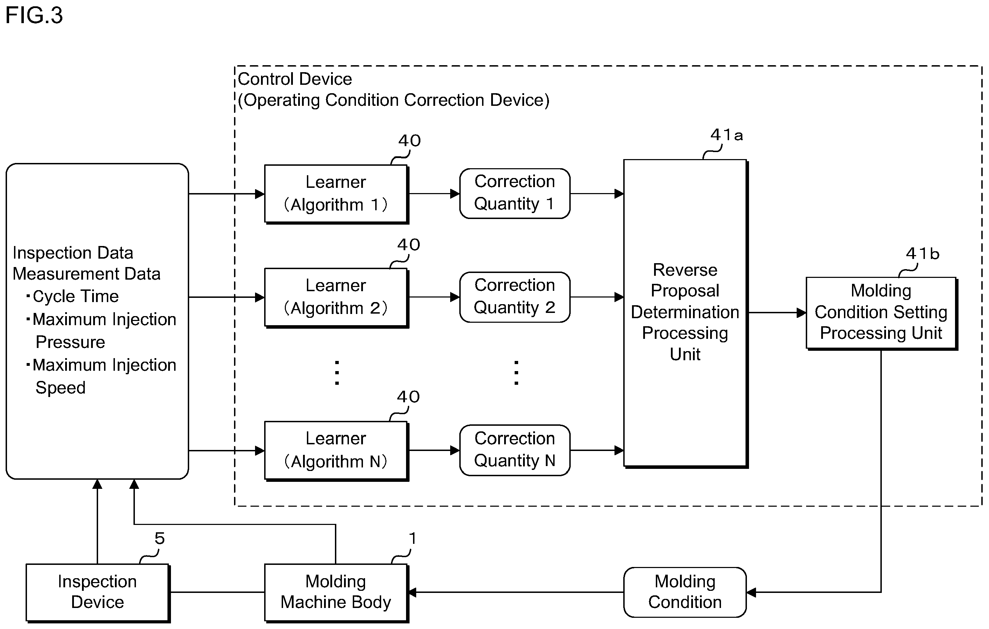

FIG. 3 is a conceptual diagram illustrating an operating condition correction processing method according to the first embodiment. As illustrated in FIG. 3, the processor 41 is equipped with a reverse proposal determination processing unit 41a and a molding condition setting processing unit 41b as functional parts in addition to the multiple kinds of learners 40.

The measurement data acquired by the first acquisition unit 44 and the inspection data obtained by the second acquisition unit 45 are input to each of the multiple learners 40. The multiple learners 40 represents models that operate according to different algorithms 1, 2, ... N. The multiple learners 40 each calculate a correction quantity for the molding conditions based on the input measurement data and inspection data.

The reverse proposal determination processing unit 41a is a functional part that determines whether or not each of the correction quantities output from the multiple learners 40 is a correction quantity related to the reverse proposal. For example, the reverse proposal determination processing unit 41a determines whether or not each of the correction quantities output from the learners 40 is the correction quantity related to the reverse proposal by a majority decision. The reverse proposal determination processing unit 41a excludes the correction quantities determined as a reverse proposal and selects the correction quantities having an accurate correction direction.

<Example 1 of Determination Method>

The reverse proposal determination processing unit 41a according to Example 1 specifies the number of positive change values and the number of negative change values output from the multiple learners 40 for each of the multiple configuration parameters, and selects the larger number of change values while excluding the smaller number of change values.
For example, assuming that correction quantities are output from five learners 40 and three positive change values and two negative change values for correcting a first configuration parameter are output, the reverse proposal determination processing unit 41a selects the positive change value. If one positive change value and four negative change values for correcting a second configuration parameter are output, the reverse proposal determination processing unit 41a selects the negative change value.

<Example 2 of Determination Method>

In Example 2, it is assumed that the change values constituting correction quantities of the reverse proposal have respective signs (positive or negative) opposite from those of the change values constituting accurate correction quantities. In other words, a case is considered where the multiple correction quantities output from the learners 40 include accurate correction quantities and correction quantities with respective signs opposite to those of the accurate correction quantities. Here, two sign combinations of change values constituting the correction quantities are possible. For example, the first combination includes the change values with positive, negative and positive signs, while the second combination includes the change values with negative, positive and negative signs.
The reverse proposal determination processing unit 41a according to Example 2 evaluates the number of correction quantities having the first combination and the number of correction quantities having the second combination, and determines the larger number of combinations of correction quantities as indicating a sign of the change values constituting the accurate correction quantities. The reverse proposal determination processing unit 41a selects the larger number of combinations of the correction quantities and excludes the smaller number of combinations of the correction quantities.

<Example 3 of Determination Method>

The reverse proposal determination processing unit 41a according to Example 3 evaluates a unit vector for each of the multiple correction quantities output from the multiple learners 40. The unit vector indicates a correction direction. The reverse proposal determination processing unit 41a performs clustering on the unit vectors of the respective correction quantities and determines the class to which a larger number of unit vectors belong as a class in the accurate correction direction. The reverse proposal determination processing unit 41a selects the correction quantities belonging to the class in the accurate correction direction and excludes the correction quantities belonging to the other classes.

<Example 4 of Determination Method>

The reverse proposal determination processing unit 41a according to Example 4 creates a reference unit vector for discriminating accurate correction quantities and correction quantities of the reverse proposal and excludes the correction quantities of the reverse proposal. The reference unit vector may be selected so that the sum of the absolute values of the inner products of each of all the correction quantities and the reference unit vector becomes the maximum. The reverse proposal determination processing unit 41a calculates the inner product of the reference unit vector and each of the multiple correction quantities and performs classification between the correction quantities of the positive inner products and the correction quantities of the negative inner products. The reverse proposal determination processing unit 41a compares the number of correction quantities of the positive inner products with the number of correction quantities of the negative inner products, determines the direction with the larger number of correction quantities as the direction of the accurate correction quantity and selects the correction quantities in the direction as correction quantities. For example, the correction quantities of the positive inner products (the larger number of correction quantities are positive) are selected as the accurate correction quantities and correction quantities of the negative inner products (the smaller number of correction quantities are negative) are excluded as the reverse correction quantities. The correction quantity of an inner product of 0 may be excluded as a correction quantity of a reverse proposal or selected as an accurate correction quantity.

The above-mentioned selection methods are mere examples, and any method can be used that is able to identify the correction direction of the correction quantities output from the multiple learners 40 and to select a larger number of correction quantities that are generally directed in the same correction direction.

The learner 40 that employs a gradient method as an optimal algorithm that does not or is unlikely to generate a reverse proposal makes it possible to select accurate correction quantities with a higher probability by the majority algorithm as described above. Likewise, the learner 40 employs Adam, momentum, Adagrad or the like as an optimal algorithm that does not or is unlikely to generate a reverse proposal, which makes it possible to select an accurate correction quantity with a higher probability.

The molding condition setting processing unit 41b is a functional part that corrects the molding condition using the correction quantity with an accurate correction direction and sets the corrected molding condition. For example, the molding condition setting processing unit 41b evaluates the average of correction quantities with the accurate correction direction and corrects the molding condition by the average of the correction quantities.

<Specific Example of Average Correction for "Determination Method of Example 1">

For example, the case is considered where the configuration parameter x, the configuration parameter y and the configuration parameter z are corrected, and the combinations of the change values (Cx, Cy, Cz) constituting correction quantities respectively output from the three learners 40 are assumed as

$$\text{a first correction quantity} = (\text{-}6, \text{-}3, 2),$$

$$\text{a second correction quantity} = (3, 1, 4)$$

and

$$\text{a third correction quantity} = (5, \text{-}1, \text{-}2).$$

For Cx, -6 of the first correction quantity is discarded while the average of the second correction quantity and the third correction quantity is evaluated by (3+5)/2=4. For Cy, 1 of the second correction quantity is discarded while the average of the first correction quantity and the third correction quantity is evaluated by (-3-1)/2=-2. For Cz, -2 of the third correction quantity is discarded while the average of the first correction quantity and the second correction quantity is evaluated by (2+4)/2=3. The configuration parameters (x, y, z) of the molding condition are corrected and set using the averages of the correction quantities.

<Specific Example of Average Correction for "Determination Method of Example 2">

For example, the case is considered where the configuration parameter x, the configuration parameter y and the configuration parameter z are corrected, and the combinations of the change values (Cx, Cy, Cz) constituting correction quantities respectively output from the three learners 40 are assumed as

$$\text{a first correction quantity} = (6, \text{-}3, 1),$$

$$\text{a second correction quantity} = (\text{-}3, 1, \text{-}4)$$

and

$$\text{a third correction quantity} = (5, \text{-}1, 2).$$

The first and third correction quantities are selected by a majority decision as the accurate correction quantities. For Cx, -3 of the second correction quantity is discarded while the average of the first and the third correction quantities is evaluated as (6+5)/2=5. For Cy, 1 of the second correction quantity is discarded while the average of the first and the third correction quantities is evaluated as (-3-1)/2=-2. For Cz, -4 of the second correction quantity is discarded while the average of the first and the third correction quantities is evaluated as (1+2)/2=1.5. The configuration parameters (x, y, z) of the molding conditions are corrected and set using the averages of the correction quantities.

Molded products produced by the injection molding machine 101 with the corrected molding conditions are inspected by the inspection device 5, and molding conditions are repeatedly corrected until the defects of the molded products are resolved.

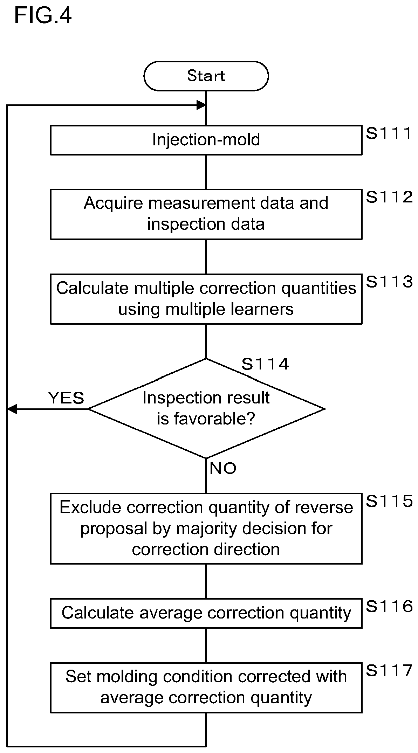

FIG. 4 is a flowchart illustrating an operating condition correction processing procedure according to the first embodiment. The processor 41 of the control device 4 controls the operation of the molding machine body 1 to allow the molding machine body 1 to injection-mold a molded product (step S111). The processor 41 then acquires the measurement data and the inspection data at the first acquisition unit 44 and the second acquisition unit 45, respectively (step S112).

Next, the processor 41 inputs the measurement data and the inspection data that are acquired at step S112 to each of the multiple learners 40 and calculates multiple correction quantities (step S113). The multiple correction quantities are calculated using the multiple learners 40.

Subsequently, the processor 41 determines whether or not the inspection result is favorable, i.e. whether or not a molded product is a conforming item based on the inspection data (step S114). For example, the processor 41 determines the quality of a molded product by judging whether or not the area of flash and the area of a short shot are below a predetermined threshold.

If determining that the inspection result is favorable (step S114: YES), the processor 41 returns the processing to step S111. If determining that the inspection result is not favorable (step S114: NO), the processor 41 determines whether or not the correction quantity output from each of the learners 40 is the correction quantity related to the reverse proposal and excludes the correction quantity of the reverse proposal (step S115).

Next, the processor 41 calculates an average correction quantity using the accurate correction quantities excluding the correction quantities of the reverse proposal (step S116), sets the molding condition corrected with the average correction quantity (step S117) and returns the processing to step S111.

By repeating the steps S111 through S117, the molding conditions are corrected in a direction in which the defect of molded products are resolved.

The injection molding machine 101 and the control device 4 (operating condition correction device) according to the first embodiment configured as described above make it possible to exclude the reverse proposal by the learners 40 and correct the molding conditions more appropriately.

Specifically, by calculating multiple correction quantities of the molding conditions using the multiple learners 40, i.e., the multiple algorithms and excluding the correction quantities related to the reverse proposal, correction of the operating conditions using the accurate correction quantity is made possible.

In addition, the control device 4 can select the accurate correction quantities with the accurate correction direction from the multiple correction quantities output from the multiple learners 40 using a simple majority decision. In the first embodiment, even if the sign of change values constituting a correction quantity is unknown, whether it is positive or negative, accurate correction quantities can be selected while excluding reverse proposals.

In addition, the control device 4 is configured to calculate an average correction quantity using accurate multiple correction quantities excluding the correction quantities related to the reverse proposal and to correct the molding condition, which makes it possible to correct the molding condition using an unbiased correction quantity and optimize the molding condition.

Though an example of correcting the molding conditions of the injection molding machine 101 was described in the present embodiment, the present technique may be applied to control devices that correct molding conditions of an extruder and other molding machines. This technique may also be applied to control devices that correct the operating conditions of any industrial machine that manufactures products.

Second Embodiment

An injection molding machine 201 according to the second embodiment is different from the first embodiment in the method of excluding the correction quantity of the reverse proposal. Since the other configurations of the injection molding machine 201 are similar to those of the injection molding machine 101 in the first embodiment, corresponding parts are designated by similar reference codes and detailed description thereof will not be made.

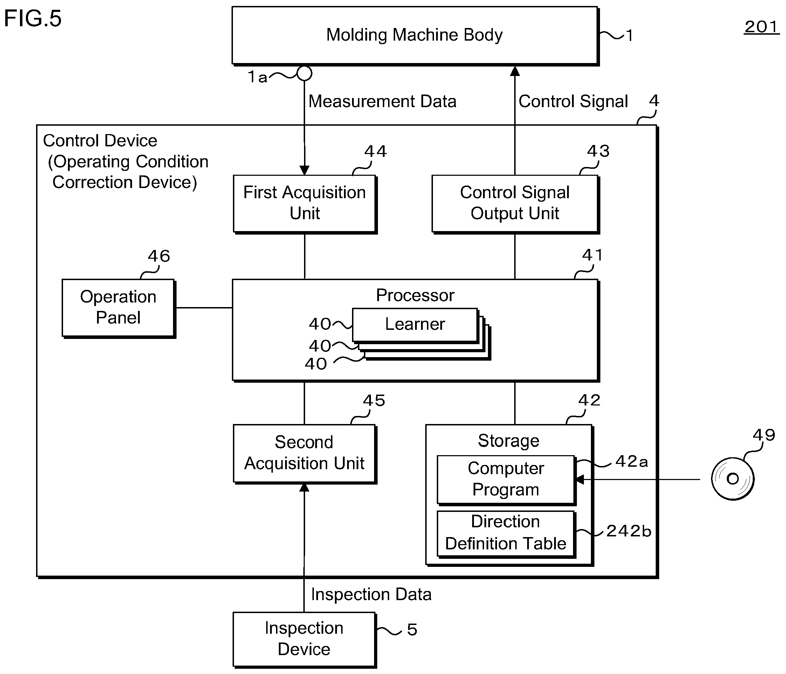

FIG. 5 is a block diagram illustrating an example of the configuration of the injection molding machine 201 according to the second embodiment. The storage 42 of the control device 4 according to the second embodiment stores a direction definition table 242b for identifying whether or not the correction quantity is a reverse proposal.

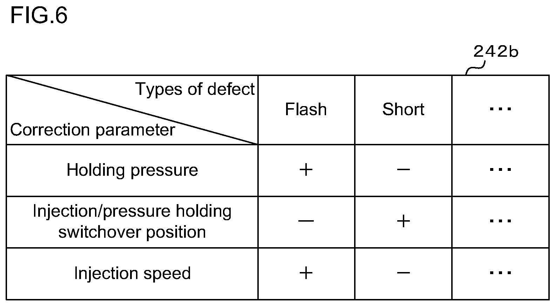

FIG. 6 is a conceptual diagram illustrating the direction definition table 242b according to the second embodiment. The direction definition table 242b stores the types of defects of a molded product and combinations of positive and negative signs of multiple change values constituting the accurate correction quantities in association with each other.

As to flash which is a defect of a molded product, for example, information indicating a positive change value of the holding pressure, a negative change value of the injection/pressure holding switchover position and a positive change value of the injection speed are associated with one another as an accurate correction direction. Likewise, as to a short shot which is also a defect of a molded product, information indicating a negative change value of the holding pressure, a positive change value of the injection/pressure holding switchover position and a negative change value of the injection speed are associated with one another as an accurate correction direction.

In particular, in the case of flash due to resin viscosity, information indicating a positive change value of the injection/pressure holding switchover position, a negative change value of the injection/pressure holding switchover speed and a negative change value of the injection/pressure holding switchover pressure are associated with one another as an accurate correction direction. In other words, the direction definition table 242b stores, in association with one another, data indicative of flash due to resin viscosity, data indicative of an appropriate change value of the injection/pressure holding switchover position being positive, data indicative of an appropriate change value of the injection/pressure holding switchover speed being negative and data indicative of an appropriate change value of the injection/pressure holding switchover pressure being negative. Likewise, in the case of a short shot due to resin viscosity, information indicating a negative change value of the injection/pressure holding switchover position, a positive change value of the injection/pressure holding switchover speed and a positive change value of the injection/pressure holding switchover pressure may be associated with one another as an accurate correction direction. In other words, the direction definition table 242b stores, in association with one another, inspection data indicative of a short shot due to resin viscosity, data indicative of an appropriate change value of the injection/pressure holding switchover position being negative, data indicative of an appropriate change value of the injection/pressure holding switchover speed being positive and data indicative of an appropriate change value of the injection/pressure holding switchover pressure being positive.

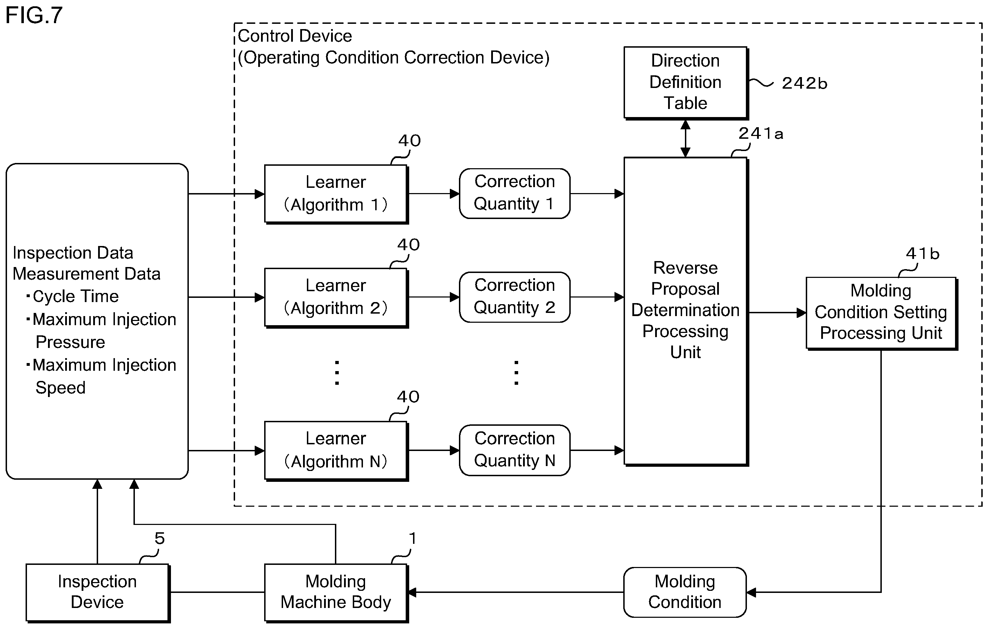

FIG. 7 is a conceptual diagram illustrating an operating condition correction processing method according to the second embodiment. The reverse proposal determination processing unit 241a according to the second embodiment is a functional part that determines whether or not each of the correction quantities respectively output from the multiple learners 40 is the correction quantity related to the reverse proposal by referring to the information in the direction definition table 242b.

Specifically, the processor 41 determines the type of defects of a molded product based on the inspection data. The types of defects include, for example, flash and a short shot. The type of defects may be subdivided based on the cause of the defect. The types of defects, for example, may include flash due to resin viscosity and a short shot due to the resin viscosity. The reverse proposal determination processing unit 241a refers to the direction definition table 242b using the type of the defects of a molded product as a key to read information indicating an accurate correction direction. The reverse proposal determination processing unit 241a identifies whether or not a correction quantity to be determined corresponds to the reverse proposal by determining whether or not the positive and negative signs of the change values of the correction quantity match the positive and negative signs of the change values indicated by the information read from the direction definition table 242b. For example, the reverse proposal determination processing unit 241a selects the correction quantity where all the positive and negative signs match as an accurate correction quantity and excludes the correction quantities other than this correction quantity.

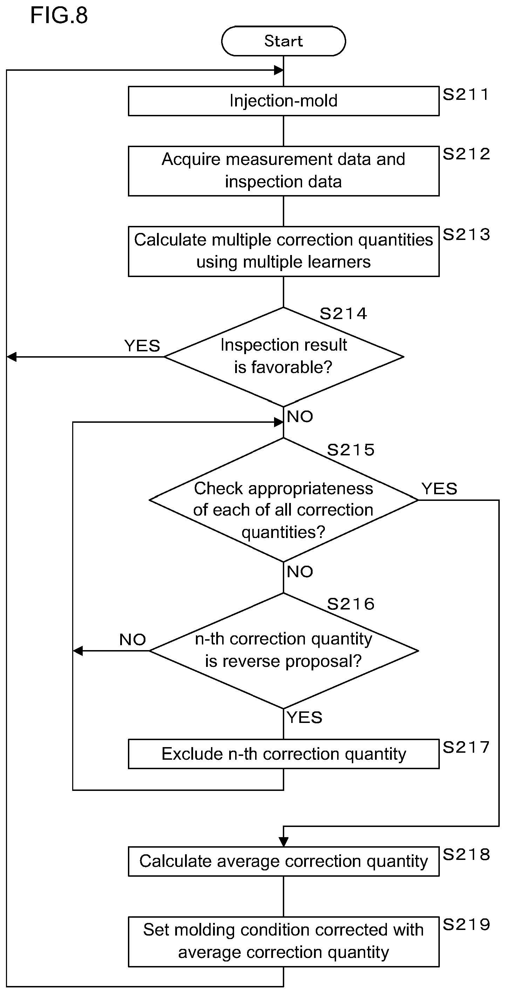

FIG. 8 is a flowchart illustrating an operating condition correction processing procedure according to the second embodiment. The processor 41 performs injection molding as in steps S111 to S113 in the first embodiment to acquire measurement data and inspection data and calculates multiple correction quantities using the multiple learners 40 (step S211, S212, S213). Next, the processor 41 determines whether or not the inspection result is favorable, i.e. whether or not a molded product is a conforming item based on the inspection data (step S214).

If determining that the inspection result is favorable (step S214: YES), the processor 41 returns the processing to step S211. If determining that the inspection result is not favorable (step S214: NO), the processor 41 determines whether or not appropriateness of each of all the correction quantities output from the multiple learners 40 is checked (step S215). If determining that there is a correction quantity that has not been checked for appropriateness (step S215: NO), the processor 41 as the reverse proposal determination processing unit 241a specifies the type of the defect of a molded product and determines whether or not the n-th correction quantity corresponds to a reverse proposal referring to the direction definition table 242b using the type of the defect as a key (step S216). Here, "n" is an integer starting from 1 and is incremented by 1 each time the processing from steps S215 to S217 is executed.

If determining that the n-th correction quantity is the reverse proposal (step S216: YES), the processor 41 excludes the correction quantity (step S217) and returns the processing to step S215. If determining that the n-th correction quantity corresponds to the accurate correction direction (step S216; NO), the processor 41 returns the processing to step S215 without excluding the correction quantity.

If determining that appropriateness is checked for all the correction quantities at step S215 (step S215: YES), the processor 41 then calculates an average correction quantity using the accurate correction quantities excluding the correction quantities of the reverse proposal (step S218), sets the molding condition corrected with the average correction quantity (step S219) and returns the processing to step S211.

According to the injection molding machine 201 and the control device 4 (operating condition correction device) in the second embodiment configured as above, appropriate setting of the direction definition table 242b ensures selection of correction quantities in the accurate direction, allowing appropriate correction of the molding conditions.

Third Embodiment

An injection molding machine 301 according to the third embodiment is different from that of the first embodiment in the correction processing performed after the correction quantity of the reverse proposal is excluded. Since the other configurations of the injection molding machine 301 are similar to those of the injection molding machine 101 in the first embodiment, corresponding parts are designated by similar reference codes and detailed description thereof will not be made.

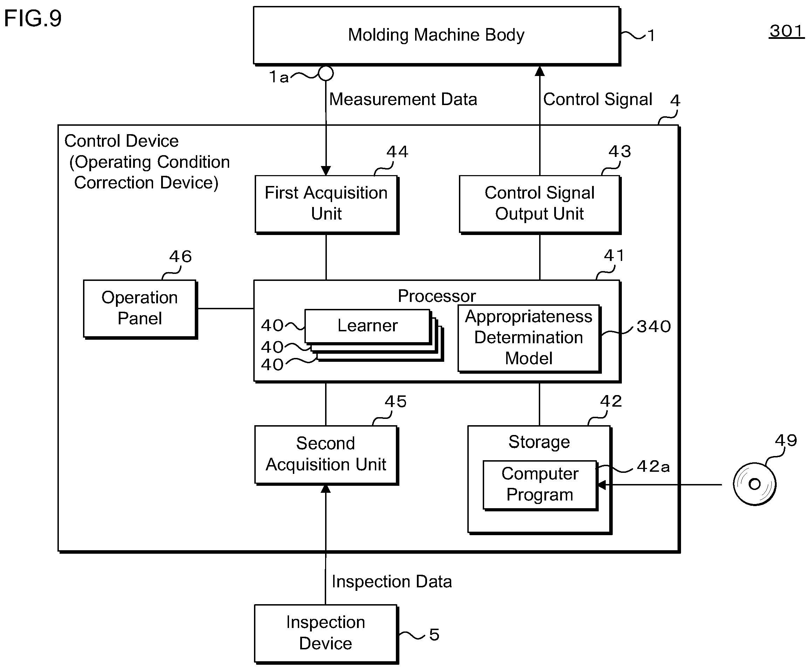

FIG. 9 is a block diagram illustrating an example of the configuration of the injection molding machine 301 according to the third embodiment. The processor 41 according to the third embodiment has an appropriateness determination model 340 as a functional part. The storage 42 stores various coefficients that feature the appropriateness determination model 340.

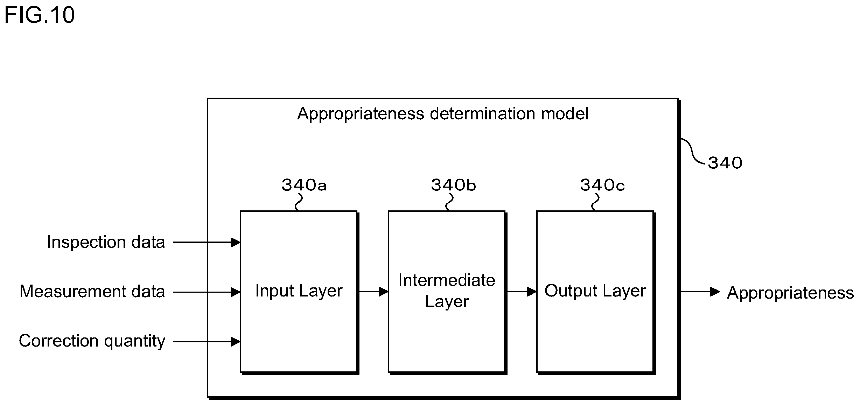

FIG. 10 is a conceptual diagram illustrating an appropriateness determination model 340 according to the third embodiment. The appropriateness determination model 340 is a neural network with an input layer 340a to which inspection data, measurement data and a correction quantity are input, an intermediate layer 340b for extracting features such as correction quantities and an output layer 340c for outputting appropriateness data indicating the appropriateness of the correction quantity calculated based on the extracted features. The appropriateness data is information indicating whether or not the correction quantity is appropriate. For example, the appropriateness data indicates that the correction quantity is more appropriate as the value increases.

The input layer 340a of the neural network contains multiple neurons to which inspection data, measurement data and correction quantities are input and passes each input data to the intermediate layer 340b.

The intermediate layer 340b has multiple layers each consisting of multiple neurons. Each of the layers extracts features related to the appropriateness of the correction quantity from the input data and passes them from the former layer to the latter layer in order, the last layer passing them to the output layer 340c.

The output layer 340c has a neuron for outputting the appropriateness of the correction quantity, from which the calculation result is output.

Though an example where the appropriateness determination model 340 is a general neural network was mainly described in the third embodiment, it may be another neural network such as a transformer, SVM (Support Vector Machine), a Basian network, a recurrent tree or the like. Alternatively, the appropriateness determination model 340 may be constructed with a reinforcement learning model.

A training method of the appropriateness determination model 340 is described. First, training data containing inspection data, measurement data, a correction quantity and appropriateness data indicating the appropriateness of the correction quantity in association with one another is collected. The correction quantities used for training are all correction quantities having appropriate correction directions. The appropriateness data is generated based on information indicating the degree of improvement in the case where the molding conditions are corrected with the correction quantities. For example, the reduction amount or reduction rate of the area of flash and the reduction amount or reduction rate of the area of a short shot may be used as appropriateness data.

The computer for training a model performs machine learning or deep learning on a neural network model to be trained using the generated training data, to generate the appropriateness determination model 340.

Specifically, the computer inputs the inspection data, measurement data and correction quantity that are included in the training data to the neural network model to be trained and obtains appropriateness data output from the output layer 340c after the arithmetic processing in the intermediate layer 340b. The computer then compares the appropriateness data output from the output layer 340c with the appropriateness data indicated by the teacher data and optimizes the parameters used for arithmetic processing in the intermediate layer 340b so that the appropriateness data output from the output layer 340c approaches the correct value. The parameters include weights (coupling coefficients) between neurons, for example. The computer optimizes various parameters using the steepest-descent method or the like though a method for optimizing parameters is not limited to a particular one. By repeatedly performing the aforementioned processing, the computer obtains the trained appropriateness determination model 340.

The processor 41 according to the third embodiment can obtain appropriateness data by inputting each of the multiple correction quantities excluding the reverse proposal into the appropriateness determination model 340. The processor 41 then selects the most appropriate correction quantity out of the multiple correction quantities excluding the reverse proposal based on the appropriateness data and corrects the molding conditions.

According to the injection molding machine 301 in the third embodiment configured as above, the use of the appropriateness determination model 340 makes it possible to surely select the most appropriate correction quantity out of the correction quantities having the accurate correction direction and correct the molding condition.

Though the third embodiment is described as a modification of the first embodiment, the technique of the third embodiment may be combined with the second embodiment.

[Description of Reference Numerals]

1: molding machine body
1a: sensor
2: mold clamping device
3: injection device
4: control device
5: inspection device
40: learner
41: processor
41a: reverse proposal determination processing unit
41b: molding condition setting processing unit
42: storage
42a: computer program
43: control signal output unit
44: first acquisition unit
45: second acquisition unit
46: operation panel
49: recording medium
101: injection molding machine
241a: reverse proposal determination processing unit
242b: direction definition table
340: appropriateness determination model

**Claims**

1. An operating condition correction method of an industrial machine, comprising:

   acquiring measurement data obtained by measuring a state of the industrial machine and inspection data obtained by inspecting a state of a product manufactured by the industrial machine;
   calculating a correction quantity of the operating condition based on the acquired measurement data and inspection data using a plurality of learners (40) trained with an association between the measurement data as well as the inspection data and a correction quantity of the operating condition;
   determining appropriateness of a correction direction of each of a plurality of the correction quantities calculated using the plurality of learners (40); and
   correcting the operating condition based on one or more of the plurality of the correction quantities determined as having the correction direction being appropriate.

2. The operating condition correction method according to claim 1, wherein by a majority decision for the correction direction, appropriateness of the correction quantity is determined.

3. The operating condition correction method according to claim 1 or 2, wherein by referring to a table (242b) including a type of a defect indicated by the inspection data and an appropriate correction direction of the operating condition that are associated with each other, using the acquired inspection data as a key, appropriateness of the correction quantity is determined.

4. The operating condition correction method according to claim 3, wherein

   the industrial machine is an injection molding machine (101), and
   the table (242b) includes data indicating flash due to resin viscosity, data indicating that an appropriate change value of an injection/pressure holding switchover position is positive, data indicating that an appropriate change value of an injection/pressure holding switchover speed is negative and data indicating that an appropriate change value of an injection/pressure holding switchover pressure is negative that are associated with one another.

5. The operating condition correction method according to claim3 or 4, wherein

the industrial machine is an injection molding machine (101), and
the table (242b) includes data indicating a short shot due to resin viscosity, data indicating that an appropriate change value of an injection/pressure holding switchover position is negative, data indicating that an appropriate change value of an injection/pressure holding switchover speed is positive and data indicating that an appropriate change value of an injection/pressure holding switchover pressure is positive that are associated with one another.

6. The operating condition correction method according to any one of claims 1 to 5, wherein by inputting the calculated correction quantity to an appropriateness determination model that outputs, if a correction quantity is input, appropriateness data indicating appropriateness of the correction quantity, appropriateness of the correction quantity is determined.

7. The operating condition correction method according to any one of claims 1 to 6, wherein at least one of the plurality of learners (40) is trained with an association between the measurement data as well as the inspection data and the correction quantity using Adam, Momentum or Adagrad.

8. The operating condition correction method according to any one of claims 1 to 7, further comprising:

calculating an average value of the plurality of the correction quantities determined as having the correction direction being appropriate, and
correcting the operating condition based on the calculated average value.

9. An operating condition correction device for correcting an operating condition of an industrial machine, comprising:

an acquisition unit that acquires measurement data obtained by measuring a state of the industrial machine and inspection data obtained by inspecting a state of a product manufactured by the industrial machine;
a plurality of learners (40), trained with an association between the measurement data as well as the inspection data and a correction quantity of the operating condition, that calculates a correction quantity of the operating condition based on the acquired measurement data and inspection data;
a determination unit that determines appropriateness of a correction direction of each of a plurality of the correction quantities calculated using the plurality of learners (40); and
a correction unit that corrects the operating condition based on one or more of the plurality of the correction quantities determined as having the correction direction being appropriate.

10. A molding machine provided with the operating condition correction device according to claim 9.

11. A computer program (42a) causing a computer to execute processing of correcting an operating condition of an industrial machine, comprising:

acquiring measurement data obtained by measuring a state of the industrial machine and inspection data obtained by inspecting a state of a product manufactured by the industrial machine;
calculating a correction quantity of the operating condition based on the acquired measurement data and inspection data using a plurality of learners (40) trained with an association between the measurement data as well as the inspection data and a correction quantity of the operating condition;
determining appropriateness of a correction direction of each of a plurality of the correction quantities calculated using the plurality of learners (40); and
correcting the operating condition based on one or more of the plurality of the correction quantities determined as having the correction direction being appropriate.

**Patentansprüche**

1. Betriebszustandskorrekturverfahren einer Industriemaschine, umfassend:

Erfassen von Messdaten, die durch Messen eines Zustands der Industriemaschine erhalten werden, und von Prüfdaten, die durch Prüfen eines Zustands eines von der Industriemaschine hergestellten Produkts erhalten werden;

Berechnen einer Korrekturgröße des Betriebszustands auf der Grundlage der erfassten Messdaten und Prüfdaten unter Verwendung einer Mehrzahl von Lernern (40), die mit einer Assoziation zwischen den Messdaten sowie den Prüfdaten und einer Korrekturgröße des Betriebszustands trainiert sind;

Bestimmen der Angemessenheit einer Korrekturrichtung jeder aus einer Vielzahl von Korrekturgrößen, die unter Verwendung der Vielzahl von Lernern (40) berechnet werden; und

Korrigieren des Betriebszustands auf der Grundlage einer oder mehrerer der Vielzahl von Korrekturgrößen, die als eine angemessene Korrekturrichtung aufweisend bestimmt wurden.

2. Betriebszustandskorrekturverfahren nach Anspruch 1, wobei durch eine Mehrheitsentscheidung für die Korrekturrichtung die Angemessenheit der Korrekturgröße bestimmt wird.

3. Betriebszustandskorrekturverfahren nach Anspruch 1 oder 2, wobei unter Bezugnahme auf eine Tabelle (242b), die einen Typ eines durch die Prüfdaten angezeigten Fehlers und eine angemessene Korrekturrichtung des Betriebszustands enthält, die miteinander verknüpft sind, unter Verwendung der erfassten Prüfdaten als Schlüssel, die Angemessenheit der Korrekturgröße bestimmt wird.

4. Betriebszustandskorrekturverfahren nach Anspruch 3, wobei

die Industriemaschine eine Spritzgießmaschine (101) ist, und
die Tabelle (242b) Daten, die einen Grat aufgrund der Harzviskosität anzeigen, Daten, die anzeigen, dass ein angemessener Änderungswert einer Einspritz-/Druckhalteumschaltposition positiv ist, Daten, die anzeigen, dass ein angemessener Änderungswert einer Einspritz-/Druckhalteumschaltgeschwindigkeit negativ ist, und Daten, die anzeigen, dass ein angemessener Änderungswert eines Einspritz-/Druckhalteumschaltdrucks negativ ist, die miteinander verknüpft sind, enthält.

5. Betriebszustandskorrekturverfahren nach Anspruch 3 oder 4, wobei

die Industriemaschine eine Spritzgießmaschine (101) ist, und
die Tabelle (242b) Daten, die einen kurzen Schuss aufgrund der Harzviskosität anzeigen, Daten, die anzeigen, dass ein angemessener Änderungswert einer Einspritz-/Druckhalteumschaltposition negativ ist, Daten, die anzeigen, dass ein angemessener Änderungswert einer Einspritz-/Druckhalteumschaltgeschwindigkeit positiv ist, und Daten, die anzeigen, dass ein angemessener Änderungswert eines Einspritz-/Druckhalteumschaltdrucks positiv ist, die miteinander verknüpft sind, enthält.

6. Betriebszustandskorrekturverfahren nach einem der Ansprüche 1 bis 5, wobei durch Eingeben der berechneten Korrekturgröße in ein Angemessenheitsbestimmungsmodell, das beim Eingeben einer Korrekturgröße Angemessenheitsdaten ausgibt, die die Angemessenheit der Korrekturgröße anzeigen, die Angemessenheit der Korrekturgröße bestimmt wird.

7. Betriebszustandskorrekturverfahren nach einem der Ansprüche 1 bis 6, wobei mindestens einer der Vielzahl von Lernern (40) mit einer Assoziation zwischen den Messdaten sowie den Prüfdaten und der Korrekturgröße unter Verwendung von Adam, Momentum oder Adagrad trainiert wird.

8. Betriebszustandskorrekturverfahren nach einem der Ansprüche 1 bis 7, ferner umfassend:

Berechnen eines Mittelwerts aus der Vielzahl der Korrekturgrößen, die als die angemessene Korrekturrichtung aufweisend bestimmt wurden, und
Korrigieren des Betriebszustands auf der Grundlage des berechneten Mittelwerts.

9. Betriebszustandskorrekturvorrichtung zum Korrigieren eines Betriebszustands einer Industriemaschine, umfassend:

eine Erfassungseinheit, die Messdaten, die durch Messen eines Zustands der Industriemaschine erhalten werden, und Prüfdaten, die durch Prüfen eines Zustands eines von der Industriemaschine hergestellten Produkts erhalten werden, erfasst

eine Vielzahl von Lernern (40), die mit einer Assoziation zwischen den Messdaten sowie den Prüfdaten und einer Korrekturgröße des Betriebszustands trainiert sind, die eine Korrekturgröße des Betriebszustands auf der Grundlage der erfassten Messdaten und Prüfdaten berechnet;

eine Bestimmungseinheit, die die Angemessenheit einer Korrekturrichtung für jede einer Vielzahl von Korrekturgrößen bestimmt, die unter Verwendung der Vielzahl von Lernern (40) berechnet werden; und

eine Korrektureinheit, die den Betriebszustand auf der Grundlage einer oder mehrerer der Vielzahl von Korrekturgrößen korrigiert, die als die angemessene Korrekturrichtung aufweisend bestimmt wurden.

10. Formmaschine, die mit der Betriebszustandskorrekturvorrichtung nach Anspruch 9 versehen ist.

11. Computerprogramm (42a), das einen Computer veranlasst, eine Verarbeitung zum Korrigieren eines Betriebszustands einer Industriemaschine auszuführen, umfassend:

Erfassen von Messdaten, die durch Messen eines Zustands der Industriemaschine erhalten werden, und von Prüfdaten, die durch Prüfen eines Zustands eines von der Industriemaschine hergestellten Produkts erhalten werden;

Berechnen einer Korrekturgröße des Betriebszustands auf der Grundlage der erfassten Messdaten und Prüfdaten unter Verwendung einer Vielzahl von Lernern (40), die mit einer Assoziation zwischen den Messdaten sowie den Prüfdaten und einer Korrekturgröße des Betriebszustands trainiert sind;

Bestimmen der Angemessenheit einer Korrekturrichtung jeder aus einer Vielzahl von Korrekturgrößen, die unter Verwendung der Vielzahl von Lernern (40) berechnet werden; und

Korrigieren des Betriebszustands auf der Grundlage einer oder mehrerer der Vielzahl von Korrekturgrößen, die als die angemessene Korrekturrichtung aufweisend bestimmt wurden.

## Revendications

1. Un procédé de correction des conditions de fonctionnement d'une machine industrielle, comprenant :

l'acquisition de données de mesure obtenues par la mesure d'un état de la machine industrielle et de données d'inspection obtenues par l'inspection d'un état d'un produit fabriqué par la machine industrielle ;

le calcul d'une valeur de correction de la condition de fonctionnement sur la base des données de mesure et des données d'inspection acquises, à l'aide d'une pluralité d'apprenants (40) entraînés avec une association entre les données de mesure, les données d'inspection et une valeur de correction de la condition de fonctionnement;

la détermination de l'adéquation d'une direction de correction pour chacune d'une pluralité de valeurs de correction calculées à l'aide de la pluralité d'apprenants (40) ; et

la correction de la condition de fonctionnement sur la base d'une ou plusieurs desdites valeurs de correction, déterminées comme ayant une direction de correction appropriée.

2. Le procédé de correction de condition de fonctionnement selon la revendication 1, dans lequel l'adéquation de la valeur de correction est déterminée par une décision majoritaire concernant la direction de correction.

3. Le procédé de correction de condition de fonctionnement selon la revendication 1 ou 2, dans lequel, par consultation d'une table (242b) comprenant un type de défaut indiqué par les données d'inspection et une direction de correction appropriée de la condition de fonctionnement, associées l'une à l'autre, l'adéquation de la valeur de correction est déterminée en utilisant les données d'inspection acquises comme clé.

4. Le procédé de correction de condition de fonctionnement selon la revendication 3, dans lequel

la machine industrielle est une machine de moulage par injection (101), et

la table (242b) comprend des données indiquant un défaut de type « bavure » dû à la viscosité de la résine, des données indiquant qu'une valeur de changement appropriée de la position de commutation injection/maintien de pression est positive, des données indiquant qu'une valeur de changement appropriée de la vitesse de commutation injection/maintien de pression est négative, et des données indiquant qu'une valeur de changement appropriée de la pression de commutation injection/maintien de pression est négative, ces données étant associées entre elles.

5. Le procédé de correction de condition de fonctionnement selon la revendication 3 ou 4, dans lequel

la machine industrielle est une machine de moulage par injection (101), et

la table (242b) comprend des données indiquant un défaut de type « manque de matière » dû à la viscosité de la résine, des données indiquant qu'une valeur de changement appropriée de la position de commutation injection/maintien de pression est négative, des données indiquant qu'une valeur de changement appropriée de la vitesse de commutation injection/maintien de pression est positive, et des données indiquant qu'une valeur de changement appropriée de la pression de commutation injection/maintien de pression est positive, ces données étant associées entre elles.

6. Le procédé de correction de condition de fonctionnement selon l'une quelconque des revendications 1 à 5, dans lequel, en entrant la valeur de correction calculée dans un modèle de détermination d'adéquation qui, lorsqu'une valeur de correction est en entrée, fournit des données d'adéquation indiquant l'adéquation de la valeur de correction, l'adéquation de ladite valeur de correction est déterminée.

7. Le procédé de correction de condition de fonctionnement selon l'une quelconque des revendications 1 à 6, dans lequel au moins un des apprenants (40) est entraîné en fonction d'une association entre les données de mesure, les données d'inspection et la valeur de correction à l'aide de l'algorithme Adam, Momentum ou Adagrad.

8. Le procédé de correction de condition de fonctionnement selon l'une quelconque des revendications 1 à 7, comprenant en outre :

le calcul d'une valeur moyenne parmi la pluralité de valeurs de correction déterminées comme ayant une direction de correction appropriée ; et

la correction de la condition de fonctionnement sur la base de la valeur moyenne calculée.

9. Un dispositif de correction de condition de fonctionnement destiné à corriger une condition de fonctionnement d'une machine industrielle, comprenant :

une unité d'acquisition configurée pour acquérir des données de mesure obtenues par la mesure d'un état de la machine industrielle et des données d'inspection obtenues par l'inspection d'un état d'un produit fabriqué par ladite machine ;

une pluralité d'apprenants (40), entraînés selon une association entre les données de mesure, les données d'inspection et une valeur de correction de la condition de fonctionnement, configurés pour calculer une valeur de correction de la condition de fonctionnement sur la base des données acquises ;

une unité de détermination configurée pour déterminer l'adéquation d'une direction de correction pour chacune d'une pluralité de valeurs de correction calculées à l'aide de la pluralité d'apprenants (40) ; et

une unité de correction configurée pour corriger la condition de fonctionnement sur la base d'une ou plusieurs desdites valeurs de correction déterminées comme ayant une direction de correction appropriée.

10. Machine de moulage équipée du dispositif de correction de condition de fonctionnement selon la revendication 9.

11. Programme d'ordinateur (42a) destiné à amener un ordinateur à exécuter un traitement de correction d'une condition de fonctionnement d'une machine industrielle, comprenant :

l'acquisition de données de mesure obtenues par la mesure d'un état de la machine industrielle et de données d'inspection obtenues par l'inspection d'un état d'un produit fabriqué par ladite machine ;

le calcul d'une valeur de correction de la condition de fonctionnement sur la base des données de mesure et des données d'inspection acquises, à l'aide d'une pluralité d'apprenants (40) entraînés en fonction d'une association entre les données de mesure, les données d'inspection et une valeur de correction de la condition de fonctionnement;

la détermination de l'adéquation d'une direction de correction pour chacune d'une pluralité de valeurs de correction calculées à l'aide de la pluralité d'apprenants (40) ; et

la correction de la condition de fonctionnement sur la base d'une ou plusieurs desdites valeurs de correction déterminées comme ayant une direction de correction appropriée.

FIG.1

Control Device
(Operating Condition
Correction Device)

Inspection Device

FIG.2

Molding Machine Body ~1

101

1a Measurement Data    Control Signal    4

Control Device
(Operating Condition
Correction Device)

44
First Acquisition
Unit

43
Control Signal
Output Unit

46
Operation
Panel

41
Processor

40 Learner
40
40

45
Second
Acquisition Unit

42
Storage

42a
Computer
Program

49

Inspection Data

Inspection
Device ~5

EP 4 454 855 B1

FIG.3

EP 4 454 855 B1

FIG.4

```
                    ┌──────────────┐
                    │    Start     │
                    └──────┬───────┘
                           │
        ┌──────────────────▼──────────────┐
        │ ┌─────────────────────────────┐ │ S111
        │ │        Injection-mold       │ │
        │ └─────────────────────────────┘ │
        │                                 │
        │ ┌─────────────────────────────┐ │ S112
        │ │  Acquire measurement data   │ │
        │ │    and inspection data      │ │
        │ └─────────────────────────────┘ │
        │                                 │
        │ ┌─────────────────────────────┐ │ S113
        │ │ Calculate multiple          │ │
        │ │ correction quantities       │ │
        │ │ using multiple learners     │ │
        │ └─────────────────────────────┘ │
```

Injection-mold — S111

Acquire measurement data and inspection data — S112

Calculate multiple correction quantities using multiple learners — S113

S114

Inspection result is favorable?

YES

NO

Exclude correction quantity of reverse proposal by majority decision for correction direction — S115

Calculate average correction quantity — S116

Set molding condition corrected with average correction quantity — S117

FIG.5

Molding Machine Body ~1    201

1a

Measurement Data    Control Signal    4

Control Device
(Operating Condition
Correction Device)

First Acquisition Unit 44

Control Signal Output Unit 43

Operation Panel 46

Processor 41

Learner 40
40
40

Second Acquisition Unit 45

Storage 42

Computer Program 42a

Direction Definition Table 242b

49

Inspection Data

Inspection Device ~5

FIG.6

242b

| Types of defect / Correction parameter | Flash | Short | ... |
|---|---|---|---|
| Holding pressure | + | − | ... |
| Injection/pressure holding switchover position | − | + | ... |
| Injection speed | + | − | ... |

FIG.7

FIG.8

```
                        ┌──────────┐
                        │  Start   │
                        └──────────┘
                              │
        ┌───────────────────────────────────────┐
        │             Injection-mold            │  S211
        └───────────────────────────────────────┘
                              │
        ┌───────────────────────────────────────┐
        │    Acquire measurement data and       │  S212
        │           inspection data             │
        └───────────────────────────────────────┘
                              │
        ┌───────────────────────────────────────┐
        │  Calculate multiple correction        │  S213
        │  quantities using multiple learners   │
        └───────────────────────────────────────┘
                              │
                          S214 ◇
               YES ◄──── Inspection result
                         is favorable?
                              │ NO
                              │
                          S215 ◇
                    Check appropriateness  ──── YES
                    of each of all correction
                         quantities?
                              │ NO
                          S216 ◇
               NO ◄──── n-th correction quantity
                         is reverse proposal?
                              │ YES
        ┌───────────────────────────────────────┐
        │   Exclude n-th correction quantity    │  S217
        └───────────────────────────────────────┘

        ┌───────────────────────────────────────┐
        │  Calculate average correction quantity │  S218
        └───────────────────────────────────────┘
                              │
        ┌───────────────────────────────────────┐
        │  Set molding condition corrected with │  S219
        │       average correction quantity     │
        └───────────────────────────────────────┘
```

## FIG.9

301

Molding Machine Body ~1

1a—○
Measurement Data → | Control Signal ↑ 4

**Control Device (Operating Condition Correction Device)**

- 44 First Acquisition Unit
- 43 Control Signal Output Unit
- 46 Operation Panel
- 41 Processor
  - 40 Learner
  - 40
  - 40
  - 340 Appropriateness Determination Model
- 45 Second Acquisition Unit
- 42 Storage
  - 42a Computer Program
- 49

Inspection Data ↑

Inspection Device ~5

EP 4 454 855 B1

FIG.10

Appropriateness determination model ~340

Inspection data ⟶ 
Measurement data ⟶ Input Layer (340a) → Intermediate Layer (340b) → Output Layer (340c) ⟶ Appropriateness
Correction quantity ⟶

EP 4 454 855 B1

**EP 4 454 855 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022339837 A1

- JP 2022045698 A